# EUROPEAN PATENT SPECIFICATION

(11) **EP 1 538 924 B1**
(45) Date of publication and mention of the grant of the patent: **26.09.2007**
(21) Application number: 03790917.3
(22) Date of filing: 22.08.2003
(51) Int. Cl.: A23L 1/00, A23J 3/10, A23J 3/00, A23F 5/40, A23G 1/00, A23C 11/00

(54) **FOAMING INGREDIENT AND PRODUCTS CONTAINING THE INGREDIENT**
SCHÄUMENDER BESTANDTEIL UND DIESEN BESTANDTEIL ENTHALTENDE PRODUKTE
INGREDIENT MOUSSANT ET PRODUITS CONTENANT LEDIT INGREDIENT

(30) Priority: 30.08.2002 EP 02078600
(43) Date of publication of application: 15.06.2005
(73) Proprietor: Campina B.V., 5301 LB Zaltbommel (NL)
(72) Inventor: HOLTUS, Maria, Francisca, NL-5211 St Den Bosch (NL); BISPERINK, Christiaan, Gerrit, Jan, NL-5371 EZ Ravenstein (NL); WINTJENS, Petrus, Albertina, Gerardus, NL-5481 CZ Schijndel (NL)
(74) Representative: van Westenbrugge, Andries
(86) International application number: PCT/EP2003/009384
(87) International publication number: WO 2004/019699

(56) References cited:
- EP-A- 0 813 815
- EP-A- 1 074 181
- EP-A- 1 228 694
- WO-A-02/060283

## Description

### Field of the invention

The present invention relates to a foaming ingredient for use in foamers for instant food stuffs, in particular soluble beverages, like instant milkshakes and instant cappuccino. The invention further relates to foamers comprising such foaming ingredient and to the food stuffs that comprise these foamers.

### Background of the invention

Instant powders that upon dissolution produce foaming beverages are particularly well known. Usually these powders are a dry mix of a soluble beverage powder and a soluble foamer. The soluble foamer contains vacuoles that contain gas which, upon dissolution of the powder, produce foam. Therefore, upon the addition of (hot) water or milk, a beverage is formed, which has a foam on its upper surface.

A foamer ingredient for cappuccino-like beverages is for example the creamer ingredient known from EP-1074181. The creamer ingredient is produced from carbohydrate, protein and entrapped gas. The gas is present in an amount to release upon addition of liquid at least about 1 ml of gas at room temperature per gram of soluble creamer ingredient. The ingredient is part of the creamer that is used to whiten the coffee beverage.

WO-A-02/060283 teaches food products comprising an aqueous phase and gas microbubbles substantially dispersed in the aqueous phase, wherein the coating substantially consists of protein. These food products may be prepared by subjecting a mixture of protein and water to a sonication treatment before using it as a food ingredient. Providing stability plays a key role therein.

### Summary of the invention

The present inventors have now found that the above described creamer ingredient can be further improved with respect to foaming power and foam stability by using protein as the main ingredient and optionally a plasticizer or softener. It was found that by using mainly protein and essentially no carbohydrate it became possible to produce more and smaller vacuoles than when carbohydrate was added as a further component. More vacuoles lead to more foam. Smaller vacuoles are stronger and therefore more stable. The strength and stability of the vacuoles are even further improved by the presence of a plasticizer. It was found that the higher amount of protein in the foaming ingredient of the invention in comparison to the prior art foaming ingredients causes the foam that is generated by it to be more stable over time.

In addition, it was found that the vacuoles, in particular the ones that are formed in the presence of a plasticizer, retain the entrapped gas for a longer period of time than vacuoles in a creamer ingredient that comprises carbohydrates. This can be explained as follows. The plasticizer makes the vacuole wall less brittle, resulting in practically no cracks in the vacuoles. It is possible to produce a functional foaming ingredient that is based solely on protein but such ingredient should be handled with care to avoid damage to the vacuole wall. It is therefore preferred to use a plasticizer or softener.

Accordingly, the invention relates to a foaming ingredient which essentially consists of one or more proteins and optionally one or more plasticizers forming the wall of vacuoles that comprise entrapped gas.

### Detailed description of the invention

The term "essentially consisting of" is used herein to indicate that the amount of protein is at least 85% by weight, preferably at least 88% by weight, more preferably at least 90% by weight, even more preferably at least 92% by weight, and most preferably at least 94% by weight. The plasticizers are preferably selected from the group consisting of polyols or sugar alcohols, such as glycerol, mannitol, sorbitol, lactitol, erythritol, trehalose and/or lipids, such as fatty acids, monoglycerides, phospholipids, and are used in an amount of 0-10% by weight, preferably 3-7% by weight, more preferably 4-6% by weight, most preferably 5% by weight. Preferably glycerol and/or mannitol are used.

The ingredient may comprise other additives in addition to the one or more proteins and the plasticizer. However, the foaming ingredient comprises no added carbohydrates. It may however be the case that the protein, such as caseinate, contains some residual carbohydrate. This is however present in very minor amounts in the protein preparation after manufacture thereof and not added as a constituent of the foaming ingredient.

The other additives are preferably present in a minor amount. Examples of additives are emulsifiers, which are added to modify the size of the vacuoles. Preferably mono- and diglycerides are used.

It should be noted that the foaming ingredient can be used in a foamer that does comprise carbohydrates, for example for sweetening. However, according to the invention the material that forms the gas containing vacuoles does not comprise added carbohydrates.

The foaming ingredient can be made from a variety of proteins, such as milk proteins, e.g. caseinates, acid or rennet casein, native micellar casein (obtainable by microfiltration/ultrafiltration), whey protein isolate; egg protein; pea protein; wheat protein; soy protein or mixtures thereof. The proteins may also be used in the hydrolysed form, as peptide mixtures.

Preferably the protein is caseinate, because it originates from milk. When the foaming ingredient is used in dairy-like products such as cappuccino foamer and creamer or milkshakes, the foamer can be an all-dairy product. In addition, caseinate provides good foam stability, has a bland taste and has a neutral colour.

The foaming ingredient of the invention is obtainable by spray drying a protein solution that optionally comprises a plasticizer, to obtain a powder, subjecting the powder to a gas under pressure at elevated temperatures to weaken the walls of the vacuoles existing in the powder particles to allow the vacuoles to take up the gas under pressure, cooling the powder to cure the vacuole walls and releasing the pressure.

A suitable technique involves providing the vacuole wall material in the form of expanded particles and then entrapping gas in the particles. The expanded particles may be produced by injecting a gas into an aqueous solution of the vacuole wall material and then spray drying the concentrate to powder. The gas may be injected into the aqueous solution at a pressure of about 500 kPa to about 5 MPa. However, the pressure at which the gas is injected into the aqueous solution of vacuole wall material is not critical. The gas may also be left out.

An intermediate drying step, prior to the pressure treatment, may be incorporated in order to adjust the moisture content of the particles (formed by the vacuoles and their wall) to the right level.

The particles are then subjected to a gas atmosphere, preferably of an inert gas at high pressure and at a temperature above the glass transition temperature of the particles. The pressure may be from about 100 kPa to about 20 MPa. The temperature needed will depend upon the composition of the vacuole wall material since this will influence the glass transition temperature. However, the temperature may be readily set for any material type by the skilled person. The particles may be subjected to the pressure and temperature for as long as desired since increasing the time will generally increase the gas entrapment. Usually times of about 10 seconds to about 30 minutes are sufficient.

The particles are then subjected to quenching or curing to ensure entrapment of the gas. The particles can for example be sufficiently quenched by lowering the temperature. Once the particles are well below their glassy state, e.g. at 60°C below their glass transition temperature T_{G}, the pressure is released to ambient conditions.

The gas that is entrapped in the vacuoles may be any suitable food grade gas, such as nitrogen, carbon dioxide, N₂O, or air, and mixtures of these gases. Gases which are substantially inert are preferred.

As indicated above the foamer produced with the foaming ingredient of the invention may contain other components such as artificial sweeteners, emulsifiers, stabilisers, flowing agents, colours, flavours, aromas, and the like. Suitable artificial sweeteners include saccharin, cyclamates, acesulfame, L-aspartyl based sweeteners such as aspartame, and mixtures of these. Suitable emulsifiers include monoglycerides, diglycerides, lecithin, diacetyl tartaric acid esters of mono-diglycerides (DATEM esters), and mixtures thereof. Suitable stabilisers include dipotassium phosphate and sodium citrate. A suitable flowing agent is sodium silica aluminate.

The foaming ingredient of the invention may be used in a standard foamer or creamer in an amount of 10-80 weight%, preferably 20-60 weight%, most preferably 30-50 weight%.

The foamer or creamer, which is in a soluble form, may then be mixed with other components of the desired beverage or food stuff powder. Examples of such beverages are instant cappuccino, instant chocolate drinks, instant tea and instant milkshake. Other non-beverage food stuffs are soups, sauces and desserts.

In this specification a foamer is a product that provides a foam upon dissolution, whereas a creamer has whitening power and may also provide a foam.

The present invention will be further illustrated in the examples that follow and that are not intended to limit the invention.

### EXAMPLES

### EXAMPLE 1

### Preparation of foaming ingredient

### 1. Drying process

A mixture of 95 parts (w/w) sodium caseinate (EM-7, DMV International) and 5 parts (w/w) glycerol was prepared. The mixture was dissolved in water to a solids content of about 15% by weight. After complete dissolution the mixture was fed to a spray dryer (type: nozzle dryer). Nitrogen gas was injected into the feedpipe of the nozzle and the mixture was spray dried in the spray dryer and dried further in a fluidized bed to a moisture content of 3%.

### 2. Gasloading process

Subsequently, the powder was subjected to an atmosphere of nitrogen gas at a pressure of about 3 MPa and a temperature of 95°C for about 20 minutes. The powder was then cooled to below 30°C after which the pressure was slowly released.

### 3. Hot coffee application

The foaming ingredient powder was mixed with a soluble cappuccino foamer base (DP 387, DMV International), powdered sugar and a soluble coffee powder in a weight ratio of 2.0 : 4.0 : 2.0 : 2.0 to provide a soluble coffee beverage powder. An amount of 10 g of the resulting powder was placed in a beaker of about 0.05 m diameter and 100 ml of hot water (about 85°C) was added. The beverage was stirred twice. The beverage had an attractive light, fluffy foam with a height of about 0.035 m. The foam volume was about 70 ml.

### 4. Cold chocolate drink application

The foaming ingredient powder of the invention was mixed with instantized (e.g. lecithinized) cocoa powder, skim milk powder and sugar in a ratio of 1.0 : 1.0 : 4.0 : 4.0 to provide a cold soluble chocolate beverage powder. An amount of 20 g of the resulting powder was placed in a beaker of about 0.05 m diameter and 120 ml of cold water was added. The beverage was stirred for 15 seconds. The beverage had a light, fluffy and stable foam of height about 0.02 m and was stable for at least 1 hour. The foam volume was about 40 ml.

### EXAMPLE 2 (comparative)

### Coffee application

The hot soluble coffee beverage powder of example 1 (A) was compared to a hot soluble beverage powder (B) in which the foaming ingredient was prepared according to example 2 of European patent application EP-1 074 181. Sample B contains the same amount of foaming ingredient, DP387, powdered sugar and soluble coffee powder (in a weight ratio of 2.0 : 4.0 : 2.0 : 2.0) as sample (A).

10 grams of each powder was placed in a beaker of about 0.05 m diameter and 100 ml of hot water (85°C) was added. The resulting beverage was stirred twice. The foam heights and volumes were as follows:

| Sample | Foam height (m) | Foam volume (ml) |
|---|---|---|
| A | 0.035 | 70 |
| B | 0.02 | 40 |

### EXAMPLE 3 (comparative)

### Cold chocolate drink application

The cold soluble beverage powder of example 1 (A) was compared to a cold soluble beverage powder (B) in which the foaming ingredient was prepared according to example 2 of European patent application EP-1 074 181. Both samples (A and B) contain the same amounts of foaming ingredient, powdered sugar, cocoa powder and skim milk powder (in a weight ratio of 1.0 : 1.0 : 4.0 : 4.0)

20 Grams of each powder was placed in a beaker of about 0.05 m diameter and 120 ml of cold water was added. The resulting beverage was stirred for 15 seconds. The foam heights and volumes were as follows:

| Sample | Foam height (m) | Foam volume (ml) |
|---|---|---|
| A | 0.02 | 40 |
| B | 0.008 | 16 |

## Claims

1. Foaming ingredient which essentially consists of one or more proteins and optionally one or more plasticizers forming the wall of vacuoles that comprise entrapped gas, wherein the amount of protein is at least 85% by weight.

2. Foaming ingredient according to claim 1, comprising no added carbohydrates.

3. Foaming ingredient according to any one of the preceding claims, wherein said one of more plasticizers are polyols or sugar alcohols and/or lipids.

4. Foaming ingredient according to any one of the preceding claims, wherein said one or more plasticizers are present in an amount of 0-10% by weight.

5. Foaming ingredient according to any one of the preceding claims, wherein the protein is selected from the group consisting of milk proteins, e.g. caseinates, acid or rennet casein, native micellar casein, whey protein isolate; egg protein; pea protein; wheat protein; soy protein; mixtures thereof or hydrolysed forms thereof.

6. Foaming ingredient according to claim 5, wherein said protein is caseinate.

7. Foaming ingredient according to any one of the preceding claims obtainable by spray drying a protein solution that optionally comprises a plasticizer, to obtain a powder, subjecting the powder to a gas under pressure at elevated temperatures to weaken the walls of the vacuoles existing in the powder particles to allow the vacuoles to take up the gas under pressure, cooling the powder to cure the vacuole walls and releasing the pressure.

8. Use of a foaming ingredient according to any one of the preceding claims for use in foamers or creamers for cappuccino-type beverages, milkshakes, instant chocolate drinks, instant tea, soups, sauces, desserts.

9. Foamer, comprising a foaming ingredient according to any one of claims 1 - 7.

10. Creamer, comprising a whitening agent and a foaming ingredient according to any one of claims 1 - 7.

11. Instant cappuccino comprising a soluble coffee powder and a soluble creamer, which creamer comprises a foaming ingredient according to any one of claims 1 - 7.

12. Instant milkshake comprising a soluble milkshake powder and a soluble foamer, which foamer comprises a foaming ingredient according to any one of claims 1 -7.

13. Method for preparing a foamer ingredient according to any one of claims 1 - 7, comprising the steps of:
a) spray drying a protein solution that optionally comprises a plasticizer, to obtain a powder;
b) subjecting the powder to a gas under pressure at elevated temperatures to weaken the walls of the vacuoles existing in the powder particles to allow the vacuoles to take up the gas under pressure;
c) cooling the powder to cure the vacuole walls; and
d) releasing the pressure.

## Patentansprüche

1. Schäumender Bestandteil, der im Wesentlichen aus einem oder mehreren Proteinen und gegebenenfalls einem oder mehreren Weichmachern, die die Wand der Vakuolen bilden, die das eingeschlossene Gas umfassen, besteht, wobei die Menge an Protein mindestens 85 Gew.-% beträgt.

2. Schäumender Bestandteil nach Anspruch 1, umfassend keine zugegebenen Kohlenhydrate.

3. Schäumender Bestandteil nach einem der vorstehenden Ansprüche, wobei der eine oder die mehreren Weichmacher Polyole oder Zuckeralkohole und/oder Lipide sind.

4. Schäumender Bestandteil nach einem der vorstehenden Ansprüche, wobei der eine oder die mehreren Weichmacher in einer Menge von 0 bis 10 Gew.-% vorhanden sind.

5. Schäumender Bestandteil nach einem der vorstehenden Ansprüche, wobei das Protein aus Milchproteinen, z. B. Caseinate, saures oder Labcasein, natives mizellares Casein, Molkenproteinisolat; Eiprotein; Erbsenprotein; Weizenprotein; Sojaprotein; Gemischen davon oder hydrolysierten Formen davon gewählt wird.

6. Schäumender Bestandteil nach Anspruch 5, wobei das Protein Caseinat ist.

7. Schäumender Bestandteil nach einem der vorstehenden Ansprüche, der erhältlich ist, indem eine Proteinlösung, die gegebenenfalls einen Weichmacher umfasst, sprühgetrocknet wird, wodurch ein Pulver erhalten wird, das Pulver bei erhöhten Temperaturen einem Gas unter Druck ausgesetzt wird, um die Wände der Vakuolen, die es in den Pulverteilchen gibt, zu schwächen, wodurch ermöglicht wird, dass die Vakuolen das Gas unter Druck aufnehmen, das Pulver abgekühlt wird, um die Vakuolenwände zu härten, und der Druck abgebaut wird.

8. Verwendung eines schäumenden Bestandteils nach einem der vorstehenden Ansprüche in Schäumern oder Milchaufschäumern für Getränke vom Cappuccino-Typ, Milchshakes, Instant-Schokoladengetränke, Instant-Tee, Suppen, Saucen, Desserts.

9. Schäumer, umfassend einen schäumenden Bestandteil nach einem der Ansprüche 1 bis 7.

10. Milchaufschäumer, umfassend ein Weißungsmittel und einen schäumenden Bestandteil nach einem der Ansprüche 1 bis 7.

11. Instant-Cappuccino, umfassend ein lösliches Kaffeepulver und einen löslichen Milchaufschäumer, wobei der Milchaufschäumer einen schäumenden Bestandteil nach einem der Ansprüche 1 bis 7 umfasst.

12. Instant-Milchshake, umfassend ein lösliches Milchshakepulver und einen löslichen Schäumer, wobei der Schäumer einen schäumenden Bestandteil nach einem der Ansprüche 1 bis 7 umfasst.

13. Verfahren zum Herstellen eines Schäumerbestandteils nach einem der Ansprüche 1 bis 7, umfassend die Schritte:
a) Sprühtrocknen einer Proteinlösung, die gegebenenfalls einen Weichmacher umfasst, wodurch ein Pulver erhalten wird;
b) das Pulver einem Gas unter Druck bei erhöhten Temperaturen Aussetzen, um die Wände der Vakuolen, die es in den Pulverteilchen gibt, zu schwächen, wodurch ermöglicht wird, dass die Vakuolen das Gas unter Druck aufnehmen;
c) Abkühlen des Pulvers, um die Vakuolenwände zu härten; und
d) Abbauen des Drucks.

## Revendications

1. Ingrédient moussant qui consiste essentiellement en une ou plusieurs protéines et éventuellement en un ou plusieurs plastifiants formant la paroi de vacuoles qui comprennent du gaz piégé, dans lequel la quantité de protéine est au moins de 85 % en poids.

2. Ingrédient moussant selon la revendication 1, ne comprenant pas de glucides ajoutés.

3. Ingrédient moussant selon l'une quelconque des revendications précédentes, dans lequel lesdits un ou plusieurs plastifiants sont des polyols ou des alcools de sucre et/ou des lipides.

4. Ingrédient moussant selon l'une quelconque des revendications précédentes, dans lequel lesdits un ou plusieurs plastifiants sont présents dans une quantité de 0 à 10 % en poids.

5. Ingrédient moussant selon l'une quelconque des revendications précédentes, dans lequel la protéine est sélectionnée parmi le groupe constitué de protéines de lait, par ex. les caséinates, la caséine acide ou caséine présure, la caséine micellaire native, l'isolat de la protéine du petit-lait ; protéine d'oeuf ; protéine de pois ; protéine de blé ; protéine de soja ; des mélanges de celles-ci ou des formes hydrolysées de celles-ci.

6. Ingrédient moussant selon la revendication 5, dans lequel ladite protéine est le caséinate.

7. Ingrédient moussant selon l'une quelconque des revendications précédentes, pouvant être obtenu par atomisation d'une solution de protéine qui comprend éventuellement un plastifiant, pour obtenir une poudre, soumettre la poudre à un gaz sous pression à des températures élevées pour affaiblir les parois des vacuoles existant dans les particules de poudre pour permettre aux vacuoles d'absorber le gaz sous pression, refroidir la poudre pour durcir les parois de vacuoles et relâcher la pression.

8. Utilisation d'un ingrédient moussant selon l'une quelconque des revendications précédentes dans des agents moussants ou crémeux pour des boissons de type cappuccino, milkshakes, boissons chocolatées instantanées, thé instantané, soupes, sauces, desserts.

9. Agent moussant, comprenant un ingrédient moussant selon l'une quelconque des revendications 1 à 7.

10. Agent crémeux, comprenant un agent blanchissant et un ingrédient moussant selon l'une quelconque des revendications 1 à 7.

11. Cappuccino instantané comprenant une poudre de café soluble et un agent crémeux soluble, lequel agent crémeux comprend un ingrédient moussant selon l'une quelconque des revendications 1 à 7.

12. Milkshake instantané comprenant une poudre de milkshake soluble et un agent crémeux soluble, lequel agent crémeux comprend un ingrédient moussant selon l'une quelconque des revendications 1 à 7.

13. Procédé de préparation d'un ingrédient d'agent moussant selon l'une quelconque des revendications 1 à 7, comprenant les étapes consistant à :
a) atomiser une solution de protéine qui comprend éventuellement un plastifiant, pour obtenir une poudre ;
b) soumettre la poudre à un gaz sous pression à des températures élevées pour affaiblir les parois des vacuoles existant dans les particules de poudre pour permettre aux vacuoles d'absorber le gaz sous pression ;
c) refroidir la poudre pour durcir les parois des vacuoles ; et
d) relâcher la pression.
